# DEMANDE DE BREVET EUROPEEN

(11) **EP 1 179 807 A1**
(43) Date de publication de la demande: **13.02.2002**
(21) Numéro de dépôt: 00870173.2
(22) Date de dépôt: 09.08.2000
(51) Int. Cl.: G06K 19/14, B42D 15/10, G07D 7/12, B41M 3/14

(54) **Dispositif antifraude pour document.**

(71) Demandeur: BANQUE NATIONALE DE BELGIQUE S.A., B-1000 Bruxelles (BE)
(72) Inventeur: Veldeman, François, 1330 Rixensart (BE); Salade, Marc, 1490 Court-Saint-Etienne (BE)
(74) Mandataire: Vandeberg, Marie-Paule L.G.

(57) **Abrégé**

Un procédé et un dispositif destiné à un repérage rapide de documents frauduleux dans le domaine du papier-monnaie, des bons, des titres, des cartes de crédit, etc.
Au moins deux motifs (A,B) contenant des pigments fluorescents sont apposés sur un support (3). Un de ces motifs comporte une encre réagissant à une longueur d'onde donnée et émettant une couleur donnée, un autre de ces motifs comporte une encre réagissant à la même longueur d'onde en émettant la même couleur mais réagissant également à une deuxième longueur d'onde en émettant une autre couleur.
Lorsque le document est contrôlé sous rayonnements U.V., des images semblables ou dissemblables contenant des informations exploitables sont générées suivant l'éclairement, permettant l'authentification.

## Description

L'invention concerne les dispositifs visant à empêcher la fabrication et l'écoulement de documents frauduleux, dans le domaine notamment du papier-monnaie, des bons, des titres, des cartes de crédit, etc.

Des dispositifs sans cesse plus complexes sont utilisés pour décourager les fraudeurs et les faux-monnayeurs.

Pour un oeil exercé, l'examen visuel est toujours une première barrière efficace pour repérer les falsifications, en dépit de la multiplication de moyens de reproduction.

Cependant, dans certaines transactions, notamment aux heures d'affluence, aux caisses de supermarché, etc., le temps d'examen des documents, nécessairement très court, ne permet d'éliminer que les faux assez grossiers.

L'impression de billets comportant des zones imprimées avec des encres contenant des pigments réagissant aux ultraviolets (émis par exemple par une lampe de Wood) est une méthode permettant un contrôle aisé et rapide.

Dans des banques, offices de change et supermarchés, de nombreux postes sont d'ailleurs équipés d'une zone de contrôle mettant en évidence les zones imprimées fluorescentes.

Cependant, certains fraudeurs arrivent à obtenir des substituts trompeurs de cet effet fluorescent, d'où un risque effectif que l'opérateur se laisse abuser par une impression «globale» satisfaisante, en dépit de l'inadéquation manifeste des couleurs et/ou des motifs.

Des cas de contrefaçon sont connus où les faussaires utilisent un marqueur pour donner l'apparence de la présence de la protection par encre fluorescente.

Ce phénomène n'est pas lié à un manque d'attention de la personne effectuant le contrôle : outre le faible éclairement nécessaire à la mise en évidence de la fluorescence, l'oeil humain travaille là dans des conditions anormales, sans points de repère familiers (couleurs, position, forme).

En outre, l'état des documents examinés vu leurs conditions de manipulation, entraîne des fausses alertes fréquentes.

On a donc cherché un dispositif qui permet un contrôle rapide ne présentant pas les inconvénients décrits ci-dessus.

Le but de l'invention est de rendre ce type de contrefaçon plus difficile ou impossible et d'augmenter la confiance du public notamment dans la monnaie-papier, par la mise sur le marché d'un dispositif qui permet un procédé de contrôle rapide et fiable de l'authenticité de documents.

L'objet de l'invention est un dispositif antifraude pour document comprenant un support et au moins deux motifs apposés sur ledit support, un de ces motifs comportant une encre réagissant à une longueur d'onde donnée et émettant une première couleur donnée, un autre de ces motifs comportant une encre réagissant à la même longueur d'onde en émettant la même première couleur mais réagissant également à une deuxième longueur d'onde en émettant une autre couleur.

De ce fait, sous une source lumineuse produisant la première longueur d'onde, les encres composant les deux motifs réagissent en produisant un même signal et une première image composée de ces deux motifs apparaît; par contre, sous l'éclairement d'une source produisant la seconde longueur d'onde les deux motifs se différencient et donnent une deuxième image, cette seconde image s'intégrant dans la première image. Le fait que la seconde image fait partie de la première image permet un contrôle rapide.

La falsification de documents à l'aide d'un marqueur donnant l'apparence de la présence d'une encre fluorescente n'est plus possible. Même la falsification de documents protégés par deux marqueurs différents réagissant à la même longueur d'onde en émettant une couleur différante ou la falsification de documents protégés par un marqueur réagissant à deux longueurs d'onde en émettant des couleurs différantes ne parvient pas à produire un effet comparable, même de loin, à celui obtenu par le présent procédé.

Suivant une forme de réalisation avantageuse l'un et l'autre des motifs apposés sur le support se recouvrent au moins partiellement ou sont contigus.

De ce fait il ne se produit pas de discontinuité apparente dans la première image.

Suivant une forme de réalisation avantageuse l'encre utilisée pour imprimer l'un des motifs ne comporte pas de pigment réagissant à la deuxième longueur d'onde. De ce fait le motif en question est absent dans la deuxième image.

L'un et l'un autre de ces motifs peuvent former des bandes parallèles ou des bandes concentriques; suivant une forme de réalisation avantageuse, l'un de ces motifs comporte un premier réseau de guillochis et l'autre de ces motifs comporte un deuxième réseau de guillochis en concordance avec le premier. Des réseaux de guillochis concordant sont en effet très difficile à falsifier.

Combinant différentes encres, tout en étant simple à mettre en oeuvre, le dispositif de l'invention met hors de portée des fraudeurs, et surtout des fraudeurs occasionnels, la réalisation de documents falsifiés d'aspect convaincant.

Un autre objet de l'invention est un lecteur optique pour un dispositif tel que décrit ci-dessus, qui comprend :
- une chambre,
- un système d'émission de rayonnement U.V. à deux bandes passantes distinctes
- un plan de référence disposé en regard des sources de rayonnement,
- des moyens de repérage de position,
- un système de détection optique sensible au rayonnement correspondant aux couleurs émises par les pigments fluorescents comprenant au moins un détecteur optique.

Suivant un forme de réalisation avantageuse le système de détection optique comporte un système d'analyse d'image lié à au moins un détecteur optique apte à analyser la première et la deuxième image et à les comparer avec des images standards.

Le système d'émission de rayonnement U.V. peut être constitué par deux lampes juxtaposées ou par une seule lampe ou émetteur U.V. émettant dans une bande qui comprend les deux longueurs d'onde requises, associée à deux filtres U.V. Ce mode de réalisation est avantageux si le point d'émission de rayons U.V. est imposé par la conception du lecteur.

L'invention a également pour objet un procédé d'authentification de document qui comprend les opérations suivantes :
- élaborer au moins deux motifs,
- imprimer en alternance ces au moins deux motifs sur un support à l'aide d'encres contenant des pigments fluorescents, l'encre d'un de ces motifs réagissant à une première longueur d'onde donnée en émettant une couleur déterminée, l'encre d'un autre de ces motifs réagissant à la même première longueur d'onde en émettant la même couleur déterminée mais réagissant également à une deuxième longueur d'onde en émettant une autre couleur,
- soumettre le document ainsi traité alternativement à une double sources de rayonnement U.V émettant respectivement la première longueur d'onde donnée et la deuxième longueur d'onde,
- vérifier la présence d'une première image composée de ces au moins deux motifs sous le rayonnement de la source produisant la première longueur d'onde et d'une deuxième image sous le rayonnement de la seconde longueur d'onde.

La vérification peut s'accompagner au besoin d'une comparaison à des signaux de référence.

Même en laissant de côté les problèmes liés à l'approvisionnement en encres spéciales etc., le dispositif de l'invention entraîne une série de difficultés fortement accrue pour les candidats fraudeurs.

Un avantage de l'invention est que, avec peu de changement l'on peut utiliser également des postes de contrôle sous U.V. déjà existants.

Le dispositif ne servant pas à un contrôle visuel primaire, la qualité des images engendrées a relativement peu d'importance, ce qui rend ce type de protection peu sensible à la dégradation.

Outre le fait qu'il facilite un contrôle visuel rapide, le dispositif peut être facilement doublé d'un poste de contrôle, automatisé au besoin. Le dispositif de l'invention est de préférence utilisé en complément d'autres moyens de prévention de la fraude, sans interférer avec ceux-ci.

D'autres particularités et avantages de l'invention ressortiront de la description ci-après de modes de réalisation particuliers de l'invention, référence étant faite aux dessins annexés dans lesquels :
la Fig. 1 est une vue en plan de deux motifs;
la Fig. 2 est encore un plan de l'impression en bandes alternées des deux motifs de la Fig. 1 sur un support;
la Fig. 3 est une vue schématique en coupe d'un document muni du dispositif de l'invention soumis à examen;

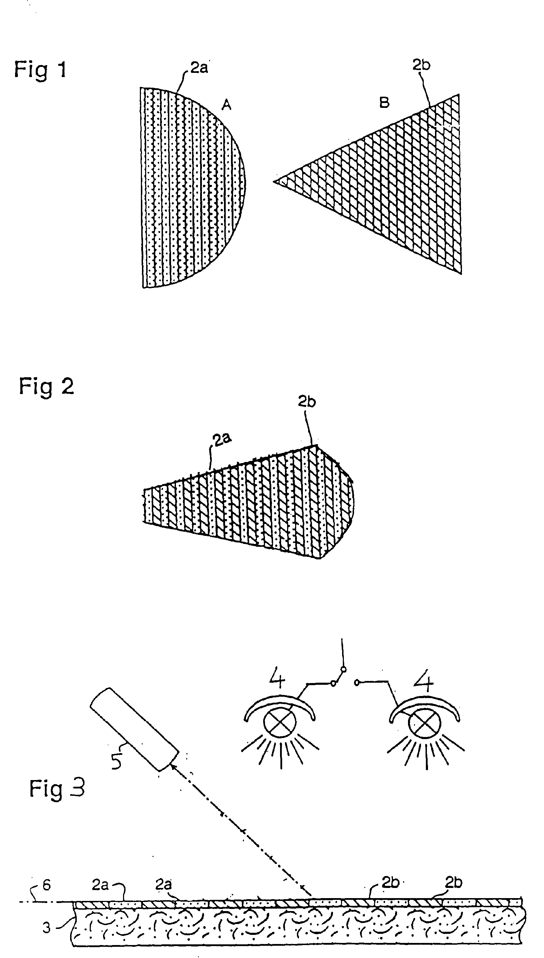

La Fig. 1 montre deux motifs A et B qui diffèrent ici l'un de l'autre en ce qu'un de ces motifs est imprimé à l'aide d'une encre réagissant à une première longueur d'onde donnée en émettant une couleur donnée, et l'autre de ces motifs à l'aide d'une encre différente, réagissant à la même longueur d'onde en émettant la même couleur mais réagissant également à une deuxième longueur d'onde en émettant une autre couleur.

Dans l'exemple de la Fig. 1 chacun de ces motifs A et B est divisé en bandes parallèles 2a, 2b.

La Fig. 2 montre la façon dont les bandes 2a et 2b formant ces deux motifs sont imprimées sur un support : les bandes respectives de chacun des motifs sont disposées côte à côte en alternance.

Les encres utilisées pour l'impression des deux motifs sont chargées de pigments qui, soumis à l'action d'un rayonnement ultraviolet, émettent un rayonnement dans le visible. Soumis à l'action du rayonnement de la première longueur d'onde donnée l'un (A) et l'autre (B) des motifs émet une même couleur donnée. Le fraudeur potentiel à donc l'impression que le document muni du dispositif de l'invention ne comporte qu'un motif. Toutefois, lorsque le document est soumis à l'action d'un rayonnement de la deuxième longueur d'onde donnée, une "partie" de ce motif unique apparaît en une couleur différente, l'autre "partie" apparaissant en une autre couleur.

La Fig. 3 illustre, hors d'échelle, le principe du contrôle, tant visuel qu'automatisé, de l'authenticité d'un document.

Le support 3 sur lequel sont imprimées les bandes alternées 2a, 2b est placé dans une chambre éclairée alternativement par deux sources de lumière ultraviolette 4, qui émettent respectivement la première longueur d'onde donnée et la deuxième longueur d'onde.

Le support 3 muni du dispositif est placé dans une zone ou une chambre partiellement occultée et soumise à ces rayonnements U.V..

Dans une version automatisée du même contrôle, on fait appel, comme représenté à la Fig. 3, plutôt qu'à l'oeil de l'observateur, à un capteur optique 5 placés dans la chambre de contrôle par rapport au plan de référence 6. La première image obtenue peut être comparée, via un ordinateur, avec une image standard, de même que la deuxième image, qui peut être comparée avec une autre image standard. Un grand avantage de l'invention est que la position de la première image peut être comparée directement, avec une bonne résolution, avec la position de la deuxième image. De ce fait la falsification de documents protégés par deux marqueurs différents devient extrêmement difficile, même si les fraudeurs utilisaient des encres de la même composition que celles des documents originaux. De façon avantageuse, l'un et l'autre des motifs apposés sur le support se recouvrent au moins partiellement ou sont contigus. De ce fait il ne se produit pas de discontinuité apparente dans la première image, ce qui renforce l'impression des fraudeurs que le document original ne comporte qu'un motif, mais rend aussi la comparaison entre la première et la deuxième image plus facile et avec une plus haute résolution.

Il va de soi que plusieurs dispositifs peuvent être apposés sur un même document.

Dans les Fig. 1 à 3, le nombre des motifs distincts a été, pour des raisons de clarté, limité à deux, mais il va de soi que le présent principe reste valable si plus de deux motifs sont utilisés.

Un moyen de repérage (non représenté), lié éventuellement à un moyen d'entraînement, peut contrôler la position du document par rapport au capteur.

Le lecteur optique peut, de même, être muni, en fonction des critères énoncés ci-dessus, de plus d'un capteur. Le capteur peut être muni de filtres interchangeable pour les deux couleurs.

Chaque motif ou leur combinaison peut, en outre, servir de support à un code (tel qu'un code barre) propre au document ou, par exemple, à sa série de fabrication.

## Revendications

1. Dispositif antifraude pour document comprenant un support (3) et au moins deux motifs (A, B) imprimés apposés sur ledit support (3), **caractérise en ce qu'**un de ces motifs comporte une encre réagissant à une longueur d'onde donnée en émettant une couleur déterminée, un autre de ces motifs comporte une encre réagissant à la même longueur d'onde en émettant la même couleur mais réagissant également à une deuxième longueur d'onde en émettant une autre couleur.

2. Dispositif antifraude suivant la revendication 1 **caractérisé en ce que** l'un et l'un autre de ces motifs apposés sur le support se recouvrent au moins partiellement ou sont contigus.

3. Dispositif antifraude suivant la revendication 1 ou 2 **caractérisé en ce que** l'encre utilisée pour imprimer l'un des motifs ne comporte pas de pigment réagissant à la deuxième longueur d'onde.

4. Dispositif antifraude suivant les revendications 1, 2 ou 3 **caractérisé en ce que** l'un de ces motifs comporte un premier réseau de guillochis et l'autre de ces motifs comporte un deuxième réseau de guillochis en concordance avec le premier.

5. Lecteur optique pour un dispositif tel que décrit ci-dessus, **caractérisé en ce qu'**il comprend :
- une chambre,
- un système (4) d'émission de rayonnement U.V. à deux bandes passantes
- un plan de référence (6) disposé en regard de la source de rayonnement,
- des moyens de repérage de position,
- un système de détection optique sensible au rayonnement correspondant aux longueur d'onde émise par les pigments fluorescents comprenant au moins un détecteur optique (5).

6. Lecteur optique suivant la revendication 5 **caractérisé en ce que** le système de détection optique comprend un système d'analyse d'image lié à cet au moins un détecteur optique pour analyser la première et la deuxième image et les comparer avec des images standards.

7. Lecteur optique suivant la revendication 5 **caractérisé en ce que** le système d'émission U.V. comprend deux sources (4) de rayonnement U.V. agissant alternativement.

8. Lecteur optique suivant la revendication 5 **caractérisé en ce que** le système d'émission U.V. comprend une seule lampe ou émetteur U.V. qui émet les deux longueurs d'onde et un jeu de filtres U.V.

9. Procédé d'authentification de document qui comprend les opérations suivantes :
- élaborer au moins deux motifs,
- imprimer en alternance ces au moins deux motifs sur un support à l'aide d'encres contenant des pigments fluorescents un de ces motifs comportant une encre réagissant à une longueur d'onde donnée et émettant une couleur donnée, un autre de ces motifs comportant une encre réagissant à la même longueur d'onde en émettant la même couleur mais réagissant également à une deuxième longueur d'onde en émettant une autre couleur,
- soumettre le document ainsi traité alternativement à un système de rayonnement U.V émettant la longueur d'onde donnée et la deuxième longueur d'onde,
- vérifier la présence d'une première image composée de ces au moins deux motifs sous la première longueur d'onde et la deuxième image sous la seconde longueur d'onde.
